# FASCICULE DE BREVET EUROPEEN

(11) **EP 4 078 781 B1**
(45) Date de publication et mention de la délivrance du brevet: **06.03.2024**
(21) Numéro de dépôt: 20824265.1
(22) Date de dépôt: 16.12.2020
(51) Int. Cl.: H02K 5/15, H02K 5/20, H02K 9/06

(54) **MACHINE ÉLECTRIQUE TOURNANTE MUNIE D'UN FLASQUE AYANT UNE FACE INTERNE CONFIGURÉE POUR LE REFROIDISSEMENT**
ELEKTRISCHE DREHMASCHINE MIT EINEM LAGERSCHILD MIT EINER ZUR KÜHLUNG DIENENDEN INNENFLÄCHE
ROTARY ELECTRIC MACHINE PROVIDED WITH AN END SHIELD HAVING AN INNER FACE CONFIGURED FOR COOLING

(30) Priorité: 19.12.2019 FR 1915034
(43) Date de publication de la demande: 26.10.2022
(73) Titulaire: VALEO EQUIPEMENTS ELECTRIQUES MOTEUR, 94046 Créteil Cedex (FR)
(72) Inventeur: TEULON, Fabien, 94046 CRETEIL (FR); DIANKHA, Ibrahima, 94046 CRETEIL CEDEX (FR)
(74) Mandataire: Valeo Powertrain Systems
(86) Numéro de dépôt international: PCT/EP2020/086590
(87) Numéro de publication internationale: WO 2021/122858

(56) Documents cités:
- EP-A1- 2 811 624
- EP-A2- 2 264 868
- FR-A1- 2 993 421
- FR-A1- 3 066 659
- US-A1- 2017 317 556

## Description

La présente invention porte sur une machine électrique tournante munie d'un flasque ayant une face interne configurée pour améliorer le refroidissement. L'invention trouve des applications particulièrement avantageuses, mais non exclusives, dans le domaine des alternateurs, des alterno-démarreurs et des moteurs électriques et machines électriques réversibles pour véhicule, notamment automobile.

Un véhicule automobile à moteur thermique est équipé d'une machine qui a pour fonction de transformer l'énergie mécanique provenant du moteur en énergie électrique dans le but notamment de recharger la batterie du véhicule et d'alimenter le réseau de bord du véhicule. Le document EP 2 811 624 A1 décrit un alternateur pour véhicule automobile.

De façon connue en soi, une telle machine comporte un carter et, à l'intérieur de celui-ci, un rotor à griffes solidaire en rotation d'un arbre, et un stator qui entoure le rotor avec présence d'un entrefer. Une poulie fixée sur l'extrémité avant de l'arbre appartient à un dispositif de transmission de mouvement à courroie entre le moteur thermique et la machine électrique.

Le stator comporte un corps formé d'un paquet de tôles doté d'encoches pour le montage des enroulements de phase du bobinage statorique. Le stator s'étend suivant un axe. Ces enroulements de phase forment des chignons s'étendant axialement en saillie de part et d'autre du corps de stator. Ces enroulements de phase sont par exemple des enroulements triphasés connectés en étoile ou en triangle, dont les sorties sont reliées à au moins un module électronique de redressement comportant des éléments redresseurs, tels que des diodes ou des transistors.

Par ailleurs, le rotor comporte deux roues polaires. Chaque roue polaire présente une base d'orientation transversale pourvue à sa périphérie externe de griffes par exemple de forme trapézoïdale. Les griffes d'une roue sont dirigées axialement vers la base de l'autre roue. Chaque griffe d'une roue polaire pénètre dans l'espace existant entre deux griffes voisines de l'autre roue polaire, de sorte que les griffes des roues polaires sont imbriquées les unes par rapport aux autres.

L'arbre du rotor est porté à rotation par le palier avant et le palier arrière du carter. A cet effet, les paliers sont de forme creuse et sont formés chacun d'un flasque, et munis chacun centralement d'un roulement à billes. Les flasques comportent des ouvertures axiales et latérales en vue de permettre le refroidissement de la machine par circulation d'air engendrée par la rotation de ventilateurs positionnés sur les faces d'extrémités axiales du rotor. Chaque ventilateur est pourvu d'une pluralité de pales. Les ouvertures latérales ménagées dans les flasques sont situées en regard des chignons correspondants.

Il a toutefois été observé que la machine pouvait rencontrer des surchauffes lors d'essais réalisés à des températures élevées, de l'ordre de 100°C notamment, représentatives des contraintes thermiques importantes dans l'environnement en sous-capot du véhicule dans lequel est située la machine électrique tournante.

Une solution connue consiste à avoir sur la face interne une portion inclinée permettant d'augmenter le flux d'air au niveau des chignons. Cependant cette solution présente les inconvénients d'un écoulement turbulent : l'air est réchauffé par les turbulences et ne peut refroidir efficacement le rotor. Afin de supprimer ce phénomène de turbulences, une solution est de remettre une portion droite. Mais dans ce cas le problème de la température n'est pas résolu, la machine chauffe trop.

L'invention vise de remédier efficacement à cet inconvénient. A cet effet, un premier aspect de l'invention concerne une machine électrique tournante pour véhicule automobile. La machine comporte :
- un stator, s'étendant suivant un axe, ledit stator comportant un corps et un bobinage muni de chignons s'étendant axialement de part et d'autre du corps de stator,
- au moins un flasque comportant un plateau s'étendant transversalement et une jupe s'étendant axialement à partir du plateau,
- le plateau comportant une face interne orientée vers un chignon de bobinage,
- caractérisée en ce que la face interne comporte une creusure principale augmentant la distance axiale minimale séparant le chignon de la face interne, la creusure principale présentant un fond s'étendant radialement.

L'air brassé par le ventilateur s'écoule à travers un « canal » élargi qui présente une section constante dans un plan radial. Ainsi, davantage d'air peut être poussé par les pales hors de la machine, et de surcroît l'air s'écoule laminairement. Ces deux effets combinés permettent de refroidir efficacement la machine. De plus, la quantité de matière nécessaire pour réaliser le flasque est réduite, ce qui permet une diminution du poids de la machine et des coûts.

Selon une réalisation, la creusure principale diminue localement l'épaisseur du plateau et augmente localement la distance axiale minimale.

Selon une réalisation, la distance axiale minimale est sensiblement constante. Selon une réalisation, la distance axiale minimale est sensiblement constante sur l'épaisseur radiale du chignon. Par sensiblement, on entend que toute variation de cette distance axiale minimale n'excède pas 5%. Cette variation peut être due aux ondulations ou aspérités du chignon.

Selon une réalisation, le fond de la creusure principale s'étend radialement sur une longueur correspondant à au moins la longueur radiale du chignon.

Alternativement, le fond de la creusure principale s'étend radialement sur une longueur correspondant à moins de la longueur radiale du chignon.

Selon une réalisation, la creusure principale s'étend axialement.

Selon une réalisation, la machine électrique tournante comporte un organe d'entraînement et le flasque se trouve entre ledit organe d'entraînement et le stator, le flasque étant alors appelé flasque avant.

Selon une réalisation, le flasque avant comporte une pluralité d'ouvertures latérales pour le passage d'air de refroidissement.

Selon une réalisation, la machine électrique tournante comporte un deuxième flasque dit flasque arrière, et des organes de fixation assemblant le flasque avant au flasque arrière.

Selon une réalisation, la creusure principale s'étend circonférentiellement sur toute la circonférence de la face interne du plateau. Selon une autre réalisation, la creusure principale s'étend circonférentiellement sur une portion de la circonférence du plateau. Selon une autre réalisation, la creusure principale s'étend circonférentiellement entre les organes de fixation. Selon une autre réalisation, la creusure principale s'étend circonférentiellement sur les parties de la face interne du flasque avant qui comportent des ouvertures latérales.

Selon l'invention, la creusure principale comporte un décroché.

Selon l'invention, la machine électrique tournante comporte un ventilateur comportant au moins une pale et le décroché est agencé en regard axialement de la pale.

Selon une réalisation, le décroché présente une forme courbe.

Selon une réalisation, la courbure du décroché comporte un rayon supérieur ou égal à 0.9 fois la distance axiale minimale.

Ainsi, le « canal » d'écoulement de l'air conserve une section constante ou quasi-constante même au niveau du décroché, permettant un écoulement laminaire de l'air poussé par les pales et donc un meilleur refroidissement.

Selon une réalisation, le ventilateur comprend un disque qui s'étend radialement et au moins une pale qui s'étend axialement, fixée sur le disque.

Selon une réalisation, la au moins une pale s'étend suivant l'axe sur une hauteur dite hauteur de pale, la hauteur de pale comprenant l'épaisseur axiale du disque et l'épaisseur axiale de la pale.

Selon une réalisation, la distance axiale minimale est comprise entre un tiers de la hauteur de pale et un demi de la hauteur de pale.

Ainsi, on obtient un très bon compromis entre l'encombrement axial de la machine et le refroidissement. La machine est peu encombrante selon la direction axiale tout en étant bien refroidie.

Selon une réalisation, la face interne comporte une creusure secondaire portant localement la distance axiale séparant le chignon de la face interne à une distance axiale augmentée, la creusure secondaire présentant un fond, dit fond secondaire, s'étendant radialement.

Ainsi, la section étant une nouvelle fois élargie et constante, davantage d'air peut s'écouler laminairement de la machine. La machine est donc encore mieux refroidie.

Selon une réalisation, le fond secondaire s'étend radialement sur une longueur correspondant à au moins la moitié de la longueur radiale du chignon.

Alternativement, le fond secondaire s'étend radialement sur une longueur correspondant à moins de la moitié de la longueur radiale du chignon.

Selon une réalisation, la creusure secondaire comporte un décroché, dit décroché secondaire, ledit décroché secondaire étant agencé en regard axialement du chignon.

Selon une réalisation, le décroché secondaire présente une forme courbe comportant un rayon de courbure supérieur à la différence entre la distance radiale augmentée et la distance axiale minimale.

L'air poussé par les pales et qui provient de l'écoulement entre le chignon et le fond de la creusure principale peut s'engouffrer efficacement entre le fond de la creusure secondaire et le chignon et donc ensuite s'échapper de la machine, permettant un meilleur refroidissement.

Selon une réalisation, la distance axiale augmentée est supérieure à la distance axiale minimale.

Selon une réalisation, la distance axiale augmentée est supérieure à une fois et demi la distance axiale minimale.

Selon une réalisation, un dépassement axial du ventilateur par rapport au chignon est positif, nul ou négatif.

Selon une réalisation, le rapport d'un dépassement axial du ventilateur par rapport au chignon sur la hauteur de pale est inférieur à 0.2.

Selon une réalisation, le rapport d'un dépassement axial du ventilateur par rapport au chignon sur la hauteur de pale est négatif.

Ainsi, un faible dépassement axial du ventilateur par rapport au chignon, même négatif, et dans la limite précitée, permet de conserver une distance suffisante entre le haut de la pale et la surface interne du plateau, pour permettre à l'air d'être poussé par les pales vers l'extérieur, tout en refroidissant une grande portion du chignon.

Selon une réalisation, la creusure secondaire s'étend circonférentiellement sur toute la circonférence de la face interne du plateau. Selon une autre réalisation, la creusure secondaire s'étend circonférentiellement sur une portion de la circonférence du plateau. Selon une autre réalisation, la creusure secondaire s'étend circonférentiellement entre les organes de fixation. Selon une autre réalisation, la creusure secondaire s'étend circonférentiellement sur les parties de la face interne du flasque avant qui comportent des ouvertures latérales.

L'invention et ses différentes applications seront mieux comprises à la lecture de la description qui suit et à l'examen des figures qui l'accompagnent, parmi lesquelles :
la [Figure 1] est une vue schématique en coupe longitudinale d'une machine, selon un mode de réalisation de l'invention ;
la [Figure 2] est une vue en perspective partielle d'un flasque de la machine électrique tournante selon la présente invention ;
la [Figure 3] est une vue schématique en coupe partielle illustrant la configuration de la face interne du flasque de la machine électrique tournante selon un premier mode de réalisation de l'invention ;
la [Figure 4] est une vue schématique en coupe partielle illustrant la configuration de la face interne du flasque de la machine électrique tournante selon un deuxième mode de réalisation de l'invention.

Les figures ne sont présentées qu'à titre indicatif et nullement limitatif de l'invention.

Pour plus de clarté, les éléments identiques ou similaires sont repérés par des signes de référence identiques sur toutes les figures.

Un véhicule automobile à moteur thermique est équipé d'une machine électrique tournante, telle qu'un alternateur, un alterno-démarreur, un moteur électrique ou une machine réversible.

Une machine telle qu'un alternateur est une machine configurée pour transformer l'énergie mécanique provenant du moteur thermique en énergie électrique dans le but notamment de recharger la batterie du véhicule et d'alimenter électriquement le réseau de bord du véhicule.

Une machine telle qu'un alterno-démarreur est un alternateur réversible, c'est-à-dire qu'il présente également un mode de fonctionnement dans lequel il transforme de l'énergie électrique en énergie mécanique pour notamment démarrer le moteur thermique du véhicule automobile. Dans ce cas, la machine tournante se comporte comme un moteur électrique.

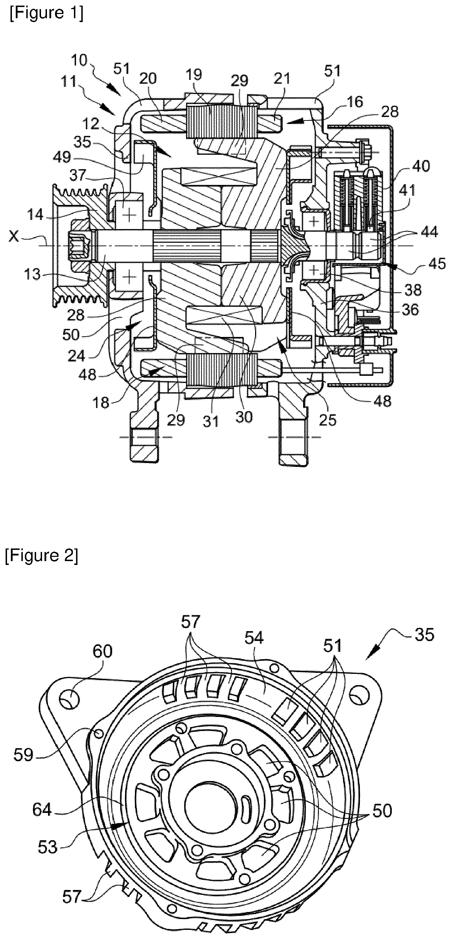

On a représenté sur la figure 1 une machine 10 compact et polyphasé, notamment pour véhicule automobile. Cette machine 10 comporte un carter 11 et, à l'intérieur de celui-ci, un rotor à griffes 12 monté sur un arbre 13, et un stator 16 qui entoure le rotor 12 avec présence d'un entrefer. Un organe d'entraînement telle qu'une poulie 14 est fixée sur l'arbre 13. Cette poulie 14 appartient à un dispositif de transmission de mouvement à courroie entre la machine 10 et le moteur thermique du véhicule automobile. En variante, la poulie 14 est remplacée par une coupelle entraînée directement par le moteur thermique.

Le stator 16 s'étend suivant un axe X coaxial avec l'axe de l'arbre 13. Le stator 16 comporte un corps 19 en forme d'un paquet de tôles doté de dents délimitant des encoches pour le montage d'un bobinage 18. Le bobinage 18 comporte des enroulements de phase traversant les encoches du corps de stator 19 et formant un chignon avant 20 et un chignon arrière 21 s'étendant en saillie de part et d'autre du corps de stator 19.

Les enroulements de phase sont obtenus par exemple à partir d'un fil continu recouvert d'émail ou à partir d'éléments conducteurs en forme de barre, tels que des épingles reliées entre elles par exemple par soudage. Ces enroulements sont par exemple des enroulements triphasés ou double-triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur (comme décrit par exemple dans le document FR2745445) ou d'un onduleur.

Le rotor 12 comporte deux roues polaires 24, 25 présentant chacune une base 28 d'orientation transversale pourvue à sa périphérie externe de griffes 29 par exemple de forme trapézoïdale. Les griffes 29 d'une roue 24, 25 sont dirigées axialement vers la base 28 de l'autre roue. Chaque griffe 29 d'une roue polaire 24, 25 pénètre dans l'espace existant entre deux griffes 29 voisines de l'autre roue polaire, de sorte que les griffes 29 des roues polaires 24, 25 sont imbriquées les unes par rapport aux autres.

Un noyau cylindrique 30 est intercalé axialement entre les bases 28 des roues 24, 25. En l'occurrence, le noyau 30 consiste en deux demi-noyaux appartenant chacun à l'un des bases 28. Ce noyau 30 porte à sa périphérie externe une bobine d'excitation 31 bobinée dans un isolant intercalé radialement entre le noyau 30 et la bobine 31.

Par ailleurs, le carter 11 comporte des paliers avant et arrière assemblés l'un avec l'autre au moyen d'organes de fixation, tel que des tirants. Les paliers sont de forme creuse et sont formés respectivement d'un flasque avant 35 et d'un flasque arrière 36, et munis respectivement centralement d'un roulement à billes. Les flasques 35, 36 sont de forme creuse et sont munis chacun centralement d'un logement de réception 37, 38 des roulements à billes pour le montage à rotation de l'arbre 13 du rotor. Le flasque arrière 36 porte un porte-balais 40 muni de balais 41 destinés à venir frotter contre des bagues 44 d'un collecteur 45 reliées par des liaisons filaires au bobinage d'excitation 31. Les balais 41 sont reliés électriquement à un régulateur de tension ou un module de commande.

Les flasques avant 35 et arrière 36 comportent des ouvertures axiales 50 et latérales 51 en vue de permettre le refroidissement de la machine 10 par circulation d'air engendrée par la rotation de ventilateurs 48 fixés sur les faces d'extrémités axiales du rotor 12. Chaque ventilateur 48 est pourvu d'une pluralité de pales 49. Les ouvertures latérales 51 sont situées en regard des chignons avant 20 et arrière 21 correspondants.

Plus précisément, comme on peut le voir sur la figure 2, le flasque avant 35 comporte un plateau 53 d'orientation globalement transversale et une jupe 54 issue d'une périphérie externe du plateau 53 s'étendant axialement selon l'axe X. Les ouvertures axiales 50 sont réalisées dans le plateau 53. Les ouvertures latérales 51 sont ménagées au moins dans la jupe 54. En effet, s'il y a lieu, une portion des ouvertures latérales 51 pourra s'étendre dans le plateau 53.

Les ouvertures latérales 51 sont délimitées par des ailettes 57. Il existe ainsi une alternance d'ouvertures 51 et d'ailettes 57 suivant la circonférence de la jupe 54, deux ouvertures 51 successives étant séparées par une ailette 57.

Comme illustré sur la figure 2, le flasque avant 35 comporte plusieurs ouvertures latérales 51, par exemple groupées par quatre ou par deux, avec peu d'espace entre les ouvertures latérales d'un même groupe selon la direction circonférentielle.

En outre, la jupe 54 comporte au moins un trou traversant 59 pour le passage d'un organe de fixation, tel qu'un tirant, pour maintenir le flasque 35 en appui contre le corps de stator 19 ou contre l'autre flasque 36. Le flasque 35 comporte également des oreilles saillantes trouées 60 pour permettre la fixation de la machine électrique tournante 10 sur un élément fixe de la caisse du véhicule.

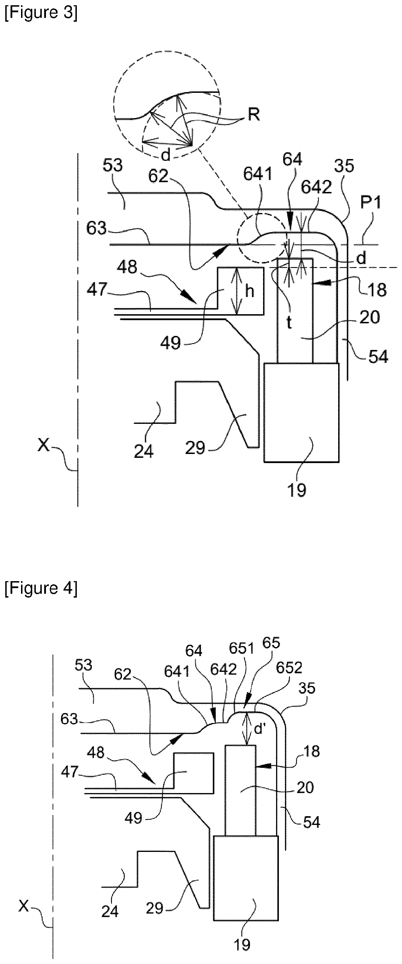

Selon l'invention, le flasque avant 35 comporte une creusure principale 64. Dans cet exemple la creusure principale 64 s'étend circonférentiellement. La creusure principale 64 s'étend radialement entre les ouvertures axiales 50 et les ouvertures latérales 51. La creusure principale 64 va maintenant être mieux décrite à l'appui de la figure 3.

Comme cela est visible sur la figure 3, le flasque 35 comporte une face interne 62 orientée vers le chignon de bobinage 20. La face interne 62 du plateau 53 comporte une portion annulaire centrale 63 s'étendant dans un plan orthogonal P1 par rapport à l'axe X, ainsi qu'une portion annulaire périphérique, dite creusure principale 64 située dans le prolongement de la portion centrale 63. La portion annulaire centrale 63 est radialement plus proche de l'axe X que la creusure principale 64. La portion radiale du plateau 53 qui comporte la creusure principale 64 forme la jonction entre la portion radiale de plateau 53 qui comporte la portion annulaire centrale 63 et la jupe 54 du flasque 35.

La creusure principale s'étend axialement. Autrement dit, la forme de creux qui la caractérise est agencée suivant la direction axiale. La creusure principale 64 augmente la distance axiale minimale d séparant le chignon 20 de la face interne 62, la creusure principale 64 présentant un fond 642 s'étendant radialement. Dans l'exemple illustré, le fond 642 s'étend radialement sur une longueur correspondant à au moins la longueur radiale du chignon 20. Autrement dit, la creusure principale 64 augmente la distance axiale séparant le chignon 20 du fond 642 de la creusure principale 64 par rapport à la distance axiale séparant le chignon 20 de la portion annulaire centrale 63.

La creusure principale 64 comporte aussi un décroché 641.

La face interne 62 comporte donc la portion annulaire centrale 63, le décroché 641 et le fond 642.

La distance axiale minimale d séparant le chignon 20 de la face interne 62 est donc augmentée au niveau du fond 642 de la creusure principale. Autrement dit, le fond 642 est situé en retrait, selon la direction axiale, par rapport à la portion annulaire centrale 63, l'épaisseur axiale du plateau 53 étant, dans cet exemple illustré, moins importante au niveau du fond 642 de la creusure 64 qu'au niveau de la portion annulaire centrale 63. Ainsi, la creusure principale diminue localement l'épaisseur du plateau 53 et augmente localement la distance axiale minimale d séparant le chignon de la face interne du plateau.

La distance minimale axiale d séparant le chignon 20 de la face interne 63 est sensiblement constante, ici sur l'épaisseur radiale du chignon 20. Par sensiblement, on entend que toute variation de cette distance axiale minimale n'excède pas 5%. Cette variation est due aux ondulations ou aspérités du chignon, elles-mêmes étant dues au bobinage 18.

Le décroché 641 permet de faire la jonction entre la portion annulaire centrale 63 et le fond 642 de la creusure 64. Le décroché 641 peut être agencé en regard axialement d'au moins une pale 49 du ventilateur 48. Le décroché 641 peut présenter une forme courbe. Comme illustré dans la partie agrandie de la figure 3, la courbure du décroché 641 comporte par exemple un rayon R supérieur ou égal à 0.9 fois la distance axiale minimale d.

Le ventilateur 48 comprend un disque 47 qui s'étend radialement et au moins une pale 49 qui s'étend axialement, fixée sur le disque 47. La pale s'étend suivant l'axe X sur une hauteur dite hauteur de pale, la hauteur de pale comprenant l'épaisseur axiale du disque 47 et l'épaisseur axiale de la pale. La distance axiale minimale peut être comprise entre un tiers de la hauteur de pale et un demi de la hauteur de pale.

Selon une autre réalisation, illustrée à la figure 4, la face interne 62 du plateau 53 comporte une portion annulaire centrale 63 s'étendant dans le plan orthogonal P1 par rapport à l'axe X (le même que dans la figure 3), ainsi qu'une portion annulaire intermédiaire, correspondant à la creusure principale 64 précédemment décrite, et une portion annulaire périphérique dite creusure secondaire 65. La creusure principale 64 est située dans le prolongement de la portion centrale 63, et la creusure secondaire 65 est située dans le prolongement de la creusure principale 64.

Comme précédemment, la creusure principale 64 s'étend axialement et comporte un décroché 641 et un fond 642. Ce qui a été décrit précédemment concernant le décroché 641 est applicable dans cette réalisation. Le fond 642 s'étend radialement, par exemple, sur une longueur correspondant à moins de la moitié de l'épaisseur radiale du chignon.

La creusure secondaire s'étend axialement. Autrement dit, la forme de creux qui la caractérise est agencée suivant la direction axiale. La creusure secondaire 65 porte localement la distance axiale séparant le chignon 20 de la face interne 62 à une distance axiale augmentée d', la creusure secondaire 65 présentant un fond, dit fond secondaire 652, s'étendant radialement. Dans l'exemple illustré, le fond 652 s'étend radialement sur une longueur correspondant à au moins la moitié de la longueur radiale du chignon 20, mais cela pourrait être moins.

La creusure secondaire 65 comporte un décroché, dit décroché secondaire 651.

La face interne 62 comporte donc la portion annulaire centrale 63, le décroché 641, le fond 642, le décroché secondaire 651 et le fond secondaire 652. La portion radiale du plateau 53 qui comporte la creusure secondaire 65 forme la jonction entre la portion radiale de plateau 53 qui comporte la portion annulaire centrale 63 et la creusure principale 64 et la jupe 54 du flasque 35.

Le fond secondaire 652 est situé en retrait, selon la direction axiale, par rapport au fond 642, celui-ci étant en retrait, selon la direction axiale, par rapport à la portion annulaire centrale 63. L'épaisseur axiale du plateau 53 est, dans cet exemple illustré, moins importante au niveau de la creusure secondaire 65 qu'au niveau de la creusure principale 64, l'épaisseur axiale du plateau 53 étant moins importante au niveau de la creusure principale 64 qu'au niveau de la portion annulaire centrale 63. Ainsi, la creusure secondaire 65 diminue localement l'épaisseur du plateau 53 et augmente localement la distance axiale séparant le chignon de la face interne du plateau, à une distance dite distance axiale augmentée d'.

La distance axiale minimale d séparant le chignon 20 de la face interne 63 est sensiblement constante, ici sur une épaisseur radiale inférieure à celle du chignon 20. La distance axiale augmentée d' séparant le chignon 20 de la face interne 63 est aussi sensiblement constante, ici sur une épaisseur radiale inférieure à celle du chignon 20. Par sensiblement, on entend que toutes variations de ces distances axiales n'excèdent pas 5%. Ces variations sont dues aux ondulations ou aspérités du chignon, elles-mêmes étant dues au bobinage 18.

Le décroché 641 permet de faire la jonction entre la portion annulaire centrale 63 et le fond 642 de la creusure 64, comme dans l'exemple précédent. Ce qui a été décrit dans l'exemple précédent concernant le décroché 641 est applicable au décroché 641 de cet exemple de réalisation.

Le décroché 651 permet de faire la jonction entre le fond secondaire 652 et le fond 642. Le décroché 651 peut être agencé en regard axialement du chignon 20. Le décroché 651 peut présenter une forme courbe. La courbure du décroché secondaire 651 comporte par exemple un rayon de courbure R' supérieur à la différence entre la distance axiale augmentée d'et la distance axiale minimale d.

Dans cet exemple de réalisation, la distance axiale augmentée d'est supérieure à une fois et demi la distance axiale minimale d.

Dans les exemples de réalisation illustrés aux figures 3 et 4, les points suivant s'appliquent :
- le rapport d'un dépassement axial t du ventilateur 48 par rapport au chignon 20 sur la hauteur h de pale 49 est inférieur à 0.2. Ce ratio peut même être négatif. En effet, un dépassement axial t duventilateur 48 par rapport au chignon 20 peut être positif, nul ou négatif ;
- les creusures principale et/ou secondaire s'étendent radialement entre les ouvertures axiales 50 et les ouvertures latérales 51 ;
- les creusures principale et/ou secondaire s'étendent circonférentiellement sur toute la circonférence de la face interne 62 du plateau 53, mais pourraient ne s'étendre que sur une portion de la circonférence du plateau 53 ou bien entre des organes de fixation tels que des tirants ; ou encore seulement sur les parties de la face interne 62 du flasque avant 35 qui comportent des ouvertures latérales 51.

Naturellement, l'invention n'est pas limitée aux modes de réalisation décrits en référence aux figures et des variantes pourraient être envisagées sans sortir du cadre de l'invention.

## Revendications

1. Machine électrique tournante (10) pour véhicule automobile comportant :
- un stator (16), s'étendant suivant un axe (X), ledit stator comportant un corps (19) et un bobinage (18) muni de chignons (20, 21) s'étendant axialement de part et d'autre du corps de stator (19),
- au moins un flasque (35) comportant un plateau (53) s'étendant transversalement et une jupe (54) s'étendant axialement à partir du plateau (53),
- le plateau (53) comportant une face interne (62) orientée vers un chignon de bobinage (20),
- la face interne (62) comporte une creusure principale (64) augmentant la distance axiale minimale (d) séparant le chignon (20) de la face interne (62), la creusure principale (64) présentant un fond (642) s'étendant radialement, la creusure principale (62) comportant un décroché (641), la machine comportant un ventilateur (48) comportant au moins une pale (49), **caractérisée en ce que** le décroché (641) est agencé en regard axialement de la pale (49).

2. Machine électrique tournante selon la revendication précédente, **caractérisée en ce qu'**au moins ladite pale (49) s'étend suivant l'axe (X) sur une hauteur dite hauteur de pale (h) et **en ce que** la distance axiale minimale (d) est comprise entre un tiers de la hauteur (h) de pale et un demi de la hauteur (h) de pale.

3. Machine électrique tournante selon la revendication précédente, **caractérisée en ce que** le rapport d'un dépassement axial (t) du ventilateur par rapport au chignon sur la hauteur (h) de pale est inférieur à 0.2.

4. Machine électrique tournante selon l'une quelconque des revendications précédentes, **caractérisée en ce que** le décroché (641) présente une forme courbe.

5. Machine électrique tournante selon la revendication précédente, **caractérisée en ce que** la courbure du décroché (641) comporte un rayon (R) supérieur ou égal à 0.9 fois la distance axiale minimale (d).

6. Machine électrique tournante selon l'une quelconque des revendications précédentes, **caractérisée en ce que** la face interne (62) comporte une creusure secondaire (65) portant localement la distance axiale séparant le chignon (20) de la face interne (62) à une distance axiale augmentée (d'), (d') étant supérieure à (d), la creusure secondaire présentant un fond, dit fond secondaire (652), s'étendant radialement.

7. Machine électrique tournante selon la revendication précédente, **caractérisée en ce que** la creusure secondaire comporte un décroché, dit décroché secondaire (651), ledit décroché secondaire (651) étant agencé en regard axialement du chignon (20).

8. Machine électrique tournante selon la revendication précédente, **caractérisée en ce que** le décroché secondaire (652) présente une forme courbe comportant un rayon de courbure (R') supérieur à la différence entre la distance axiale augmentée (d') et la distance axiale minimale (d). J

## Patentansprüche

1. Rotierende elektrische Maschine (10) für ein Kraftfahrzeug, welche umfasst:
- einen Stator (16), der sich entlang einer Achse (X) erstreckt, wobei der Stator einen Körper (19) und eine Wicklung (18), die mit Wicklungsköpfen (20, 21) ausgestattet ist, die sich axial beiderseits des Statorkörpers (19) erstrecken, umfasst,
- mindestens einen Lagerschild (35), der eine sich quer erstreckende Platte (53) und eine sich von der Platte (53) aus axial erstreckende Schürze (54) umfasst,
- wobei die Platte (53) eine Innenfläche (62) umfasst, die einem Wicklungskopf (20) zugewandt ist,
- wobei die Innenfläche (62) eine Hauptvertiefung (64) umfasst, die den minimalen axialen Abstand (d), der den Wicklungskopf (20) von der Innenfläche (62) trennt, vergrößert, wobei die Hauptvertiefung (64) einen sich radial erstreckenden Boden (642) aufweist, wobei die Hauptvertiefung (62) einen Rücksprung (641) umfasst, wobei die Maschine einen Lüfter (48) umfasst, der mindestens einen Flügel (49) umfasst, **dadurch gekennzeichnet, dass** der Rücksprung (641) axial gegenüber dem Flügel (49) angeordnet ist.

2. Rotierende elektrische Maschine nach dem vorhergehenden Anspruch, **dadurch gekennzeichnet, dass** der mindestens eine Flügel (49) sich entlang der Achse (X) über eine Höhe erstreckt, Flügelhöhe (h) genannt, und dadurch, dass der minimale axiale Abstand (d) zwischen einem Drittel der Flügelhöhe (h) und einer Hälfte der Flügelhöhe (h) beträgt.

3. Rotierende elektrische Maschine nach dem vorhergehenden Anspruch, **dadurch gekennzeichnet, dass** das Verhältnis eines axialen Überstands (t) des Lüfters bezüglich des Wicklungskopfes zur Flügelhöhe (h) kleiner als 0,2 ist.

4. Rotierende elektrische Maschine nach dem vorhergehenden Anspruch, **dadurch gekennzeichnet, dass** der Rücksprung (641) eine gekrümmte Form aufweist.

5. Rotierende elektrische Maschine nach dem vorhergehenden Anspruch, **dadurch gekennzeichnet, dass** die Krümmung des Rücksprungs (641) einen Radius (R) aufweist, der größer oder gleich dem 0,9-Fachen des minimalen axialen Abstands (d) ist.

6. Rotierende elektrische Maschine nach einem der vorhergehenden Ansprüche, **dadurch gekennzeichnet, dass** die Innenfläche (62) eine sekundäre Vertiefung (65) umfasst, die lokal den axialen Abstand, der den Wicklungskopf (20) von der Innenfläche (62) trennt, auf einen vergrößerten axialen Abstand (d') erhöht, wobei (d') größer als (d) ist, wobei die sekundäre Vertiefung einen Boden aufweist, sekundärer Boden (652) genannt, der sich radial erstreckt.

7. Rotierende elektrische Maschine nach dem vorhergehenden Anspruch, **dadurch gekennzeichnet, dass** die sekundäre Vertiefung einen Rücksprung umfasst, sekundärer Rücksprung (651) genannt, wobei der sekundäre Rücksprung (651) axial gegenüber dem Wicklungskopf (20) angeordnet ist.

8. Rotierende elektrische Maschine nach dem vorhergehenden Anspruch, **dadurch gekennzeichnet, dass** der sekundäre Rücksprung (652) eine gekrümmte Form aufweist, die einen Krümmungsradius (R') aufweist, der größer als die Differenz zwischen dem vergrößerten axialen Abstand (d') und dem minimalen axialen Abstand (d) ist.

## Claims

1. Rotary electric machine (10) for a motor vehicle, having:
- a stator (16), extending along an axis (X), said stator having a body (19) and a winding (18) provided with winding heads (20, 21) extending axially on either side of the stator body (19),
- at least one bracket(35) having a transversely extending plate (53) and a skirt (54) extending axially from the plate (53),
- the plate (53) having an internal face (62) oriented towards a winding head (20),
- the internal face (62) has a main recess (64) that increases the minimum axial distance (d) separating the winding head (20) from the internal face (62), the main recess (64) having a radially extending bottom (642), the main recess (62) having a set-back portion (641), the machine having a fan (48) having at least one blade (49), **characterized in that** the set-back portion (641) is arranged axially opposite the blade (49).

2. Rotary electric machine according to the preceding claim, **characterized in that** at least said blade (49) extends along the axis (X) over a height referred to as the blade height (h), and **in that** the minimum axial distance (d) is between one third of the blade height (h) and half the blade height (h).

3. Rotary electric machine according to the preceding claim, **characterized in that** the ratio of an axial projection (t) of the fan with respect to the winding head to the blade height (h) is less than 0.2.

4. Rotary electric machine according to any one of the preceding claims, **characterized in that** the set-back portion (641) has a curved shape.

5. Rotary electric machine according to the preceding claim, **characterized in that** the curvature of the set-back portion (641) has a radius (R) greater than or equal to 0.9 times the minimum axial distance (d).

6. Rotary electric machine according to any one of the preceding claims, **characterized in that** the internal face (62) has a secondary recess (65) locally bringing the axial distance separating the winding head (20) from the internal face (62) to an increased axial distance (d'), (d') being greater than (d), the secondary recess having a radially extending bottom, referred to as the secondary bottom (652).

7. Rotary electric machine according to the preceding claim, **characterized in that** the secondary recess has a set-back portion, referred to as the secondary set-back portion (651), said secondary set-back portion (651) being arranged axially opposite the winding head (20).

8. Rotary electric machine according to the preceding claim, **characterized in that** the secondary set-back portion (652) has a curved shape having a radius of curvature (R') greater than the difference between the increased axial distance (d') and the minimum axial distance (d).
